# EUROPEAN PATENT APPLICATION

(11) **EP 1 816 566 A2**
(43) Date of publication of application: **08.08.2007**
(21) Application number: 06255529.7
(22) Date of filing: 26.10.2006
(51) Int. Cl.: G06F 11/273

(54) **Method and system for tracing program execution in field programmable gate arrays**

(30) Priority: 19.12.2005 US 305953
(71) Applicant: Agilent Technologies, Inc., Santa Clara, CA 95051 (US)
(72) Inventor: Stewart, James B., III, Colorado Springs, CO 80908 (US); Woodward, Joel D., Colorado Springs, CO 80918 (US); Hernandez, Adrian, Colorado Springs, CO 80909 (US)
(74) Representative: Exell, Jonathan Mark

(57) **Abstract**

A method (401-404, 301-303) and system (100) for tracing program execution in field programmable gate arrays (103) and other suitable programmable logic devices is described.

## Description

### BACKGROUND

Integrated systems, such as systems on a chip (SOCs); field programmable gate arrays (FPGAs) and application specific integrated circuits (ASICs) often contain features designed to facilitate in-circuit testing. Often, when doing in-circuit testing on large circuits such as field programmable gate arrays (FPGAs), circuit signals are provided that are representative of actual operating signals throughout the operating range. The resultant signals at various points throughout the circuit are then monitored. This type of testing is commonly called real-time software program trace capture.

Many FPGAs include embedded microprocessors. These microprocessors are often implemented in synthesizable structures as well as hardware using dedicated silicon, for example. As in other components of the FPGA, ASIC, or programmable logic device (PLD), it is useful to track signals in the microprocessor during execution. In this manner, debugging of the microprocessor can be carried out.

Test instruments, such as oscilloscopes and logic analyzers, are useful in carrying out in-circuit testing. Many digital designers are accustomed to developing prototype boards using a logic analyzer as a debug aid. The designers use the logic analyzer to help uncover integration issues as well as design errors. To observe the behavior of the system, the designer probes various signals on the various buses and chips in an attempt isolate the root cause of problems. Often, these signals are provided to the circuit for probing at an output. Such signals are referred to as trace signals. It is through this probing and re-probing of various components, that sufficient information may be garnered to properly assess the factors leading to the problems. With this information it is possible for the engineering team to understand the error and implement a solution.

There are several disadvantages with current methods of tracing program execution of a microprocessor embedded in an FPGA. Moreover, the embedding of a microprocessor on the FPGA or other PLD presents added challenges to testing. For example, known methods of testing require all address signals, read/write data signals, control signals, and execution status signals to be routed out for capture and post-processing analysis by the logic analyzer. However, as real estate becomes increasingly scarce on printed circuit boards, and FPGA pins dedicated exclusively for debug are limited, real-time measurement of the processor becomes impractical. By way illustration, using known measurement methods, a 32-bit Harvard-architecture processor would require approximately dedicated 135 pins or more in order to trace processor execution. With the limited availability of FPGA pins, these known methods are not practical. In addition, not all signals from the FPGA must be analyzed in order to measure the activity of the microprocessor. Accordingly, known testing methods are impractical and inefficient.

Testing a microprocessor embedded in an FPGA by known methods also requires determining from thousands, if not tens of thousands of signals, those that are identified with the microprocessor. Only after the determination is made can useful measurements be made. Clearly, this filtering process is labor-intensive.

Furthermore, many pins on a bus are static. For example, a 32 bit address bus may have many pins that do not access the populated memory and are thus static. However, known testing methods require the routing and capture of all bits, even though many remain static. As can be appreciated, such testing methods, particularly when the number of pins dedicated for testing are scarce, is inefficient.

There is a need, therefore, to for an apparati and methods for testing embedded microprocessors that overcome at least the shortcoming of known methods discussed above.

### BRIHF DESCRIPTION OF THE DRAWINGS

The present teachings are best understood from the following detailed description when read with the accompanying drawing figures. The features are not necessarily drawn to scale. Wherever practical, like reference numerals refer to like features.
Fig. 1 is a simplified block diagram of a dynamic probe system in accordance with an example embodiment.
Fig. 2 is a simplified schematic diagram of an FPGA including a microprocessor and a microprocessor trace core (MTC) in accordance with an example embodiment.
Fig. 3A is a flow-chart of a method of setting up microprocessor test signals in the FPGA in accordance with an example embodiment.
Fig. 3B is a representation of a display of a graphic user interface used to set up a test instrument to perform measurements on a microprocessor in accordance with an example embodiment.
Fig. 4A is a flow-chart of a method of setting up microprocessor test signals in the FPGA and setting up the test instrument used to perform measurements on a microprocessor in accordance with an example embodiment.
Fig. 4B is a representation of a display of a graphic user interface to set up a microprocessor to test signals in the FPGA in accordance with an example embodiment.

### DETAILED DESCRIPTION

In the following detailed description, for purposes of explanation and not limitation, example embodiments disclosing specific details are set forth in order to provide a thorough understanding of the present teachings. Moreover, descriptions of well-known devices, hardware, software, firmware, methods and systems may be omitted so as to avoid obscuring the description of the example embodiments. Nonetheless, such hardware, software, firmware, devices, methods and systems that are within the purview of one of ordinary skill in the art may be used in accordance with the example embodiments. Finally, wherever practical, like reference numerals refer to like features.

The detailed description which follows presents methods that may be embodied by routines and symbolic representations of operations of data bits within a computer readable medium, associated processors, logic analyzers, microprocessor emulators, digital storage oscilloscopes, general purpose personal computers configured with data acquisition cards and the like. A method is here, and generally, conceived to be a sequence of steps or actions leading to a desired result, and as such, encompasses such terms of art as "routine," "program," "objects," "functions," "subroutines," and "procedures."

The apparati and methods of the example embodiments will be described with respect to implementation on a logic analyzer, but the methods recited herein may operate on a general purpose computer or other network device selectively activated or reconfigured by a routine stored in the computer and interface with the necessary signal processing capabilities. More to the point, the methods presented herein are not necessarily related to any particular device; rather, various devices may be used with routines in accordance with the teachings herein. Machines that may perform the functions of the present teachings include those manufactured by such companies as AGILENT TECHNOLOGIES, INC., HEWLETT PACKARD, and TEKTRONIX, INC. as well as other manufacturers of test and measurement equipment.

With respect to the software useful in the embodiments described herein, those of ordinary skill in the art will recognize that there exist a variety of platforms and languages for creating software for performing the procedures outlined herein. Certain illustrative embodiments can be implemented using any of a number of varieties of the C-programming language. However, those of ordinary skill in the art also recognize that the choice of the exact platform and language is often dictated by the specifics of the actual system constructed, such that what may work for one type of system may not be efficient on another system. In addition, in certain embodiments commercial software adapted for use with cores and other components may be implemented to realize certain beneficial aspects. Some commercial software is noted for illustrative purposes.

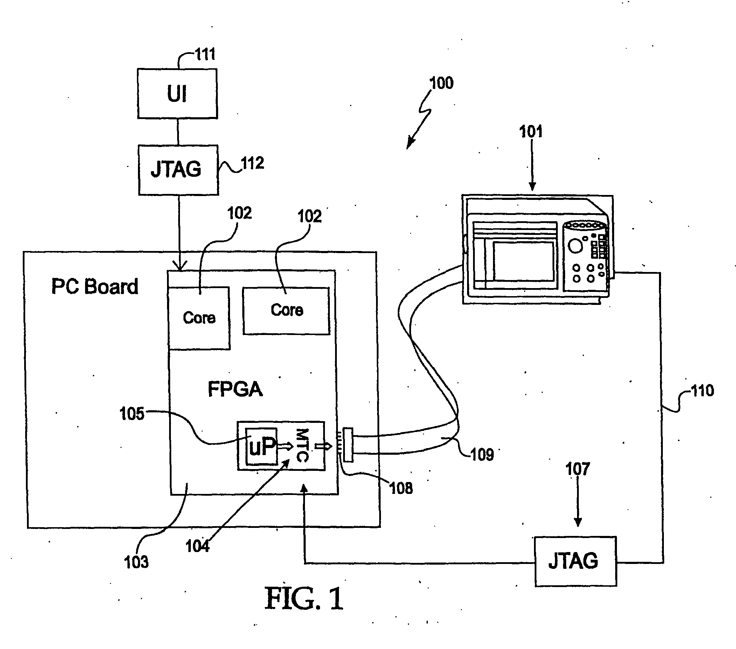

FIG. 1 is a block diagram of a dynamic probe system 100 in accordance with an example embodiment. The dynamic probe system 100 simplifies debugging on, for example, FPGAs and Systems on a Chip (SOCs) that include at least one microprocessor. The dynamic probe system 100 improves observability facilitating in-circuit debugging. While the dynamic probe system 100 is designed for the SOC flow (allowing all existing tools, design procedures, and hardware description language (HDL) for the SOC to be kept in tact) the present teachings are not limited to SOCs but may be used in a variety of environments both on and off FPGAs. In fact, the illustrative embodiments describe the implementation of the system on an FPGA 100.

The dynamic probe system 100 generally comprises a logic analyzer 101 connected to one or more cores 102 (e.g., trace cores, processors, soft macros) implemented in an FPGA 103 or other suitable PLD. A dedicated microprocessor trace core (MTC) 104 is useful in exacting measurements for debugging a microprocessor 105 implemented in the FPGA 103. The trace core 104 comprises a dedicated debug core that facilitates routing of internal microprocessor signals off the FPGA 103 to the logic analyzer 101. The core 104 may be adapted to connect internal signals from a single microprocessor embedded in an FPGA to output pins probed by a logic analyzer 101. While the present description illustrates the use of a single MTC, in embodiments, multiple MTCs 104, can be instantiated in the FPGA 103 by substantially similar methods as those described. Details of certain types of data gathering for debugging the cores of the FPGA 103 are described more fully in the referenced commonly assigned patent applications.

As described more fully herein, the MTC 104 is adapted to garner measurements from the microprocessor 105 in a manner that reduces the number of pins required and reduces the complexity of determining the signals to be processed by the microprocessor 105 being tested.

Data signals from the MTC 104 are obtained from dedicated pins 108 on the FPGA 103 over a data signal bus 109. The data signal bus 109 typically, but not necessarily, comprises a regular probing connection associated with the logic analyzer 101. As described in connection with example embodiments, the dedicated pins 108 are selected from a number of pins of the FPGA 103.

The logic analyzer 101 includes a logic analysis portion and a probe control portion. The logic analyzer 101 can be based on, for example, an AGILENT 16903A sold by Agilent Technologies, Palo Alto, CA. The logic analysis portion generally comprises a known logic analyzer while the probe control portion generally comprises additional software running under the operating system attendant to the logic analysis portion. One type of software included in the logic analyzer 101 is an inverse assembler. The inverse assembler comprises post-processing software useful in converting processor bus cycles into mnemonics and data transactions understandable by the user. As described more fully herein, information the user provides to the inverse assembler is used to determine the memory addressed by active pins. From this information the pin requirements to carry out the measurements of the execution of the microprocessor 105 are determined.

The dynamic probe system 100 may also include a serial communication bus 110 via a link 107 operating in accordance with any of a number of serial communication standards, such as IEEE 1149.1, also known as JTAG. Benefits of JTAG include a low bandwidth, ready availability and easy integration with FPGA fabric via a JTAG controller inside of the FPGA. The purpose of the JTAG controller is to determine the buses and signals that have been selected by the user for testing.

The dynamic probe system 100 also includes a user interface (UI) 111. In an example embodiment,'the UI 111 may be a personal computer (PC) or a terminal in a network. Of course, other types of user interfaces are contemplated. These include, but are not limited to, portable computers and similar suitable devices that may be connected to the FPGA 103 over a wired or wireless link. The UI 111 is connected to the FPGA 103 via a JTAG link 112 and is adapted to perform core configurations as described more fully herein. In an embodiment, the MTC 104 is added to the FGPA 103 via the UI 111. In a specific embodiment, the MTC 104 is added using a modified version of commercially available Xilinx^{®} Platform Studio software resident in the UI 111. In particular, an Embedded Development Kit (EDK) is included in the Xilinx Studio Platform enabling the addition of the MTC 104 to the FPGA 103.

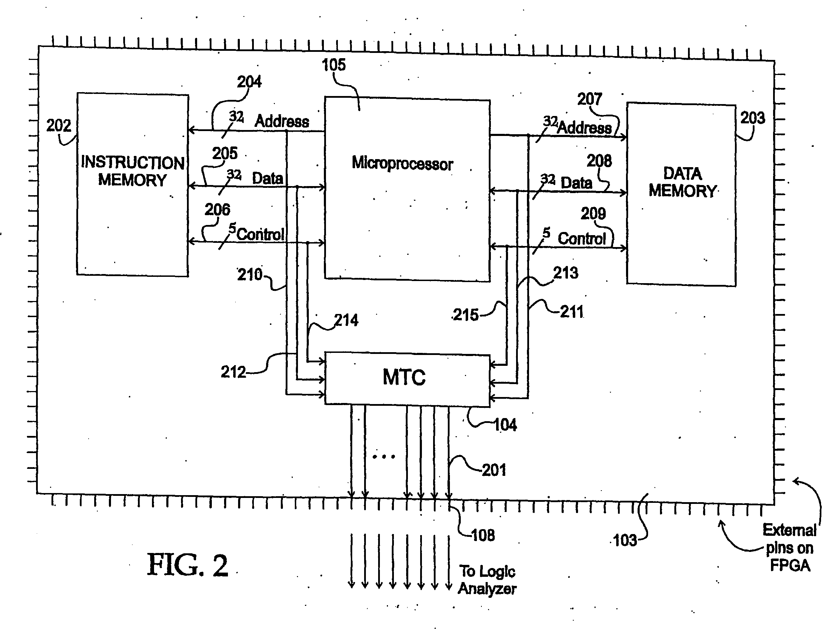

Fig. 2 is a simplified a schematic diagram of the FPGA 103 with microprocessor and trace signals. Fig. 2 isolates the interaction between the logic analyzer 101 and the FPGA 103. Many features described previously are common to those of the presently described embodiment. As such, common features are not repeated.

The FPGA 103 includes the microprocessor 105 and the MTC 104 as previously described. The logic analyzer 101 (not shown in Fig. 2) is connected to the trace pins 108 by the bus 109. The trace pins 108 are connected to the MTC 104 by a corresponding number of traces 201. In an embodiment, the microprocessor 105 is based on a Harvard Architecture and includes an instruction (program) 'side' and a data 'side.' The instruction side is connected to an instruction memory 202 and the data side is connected to a data memory 203. During operation, the microprocessor 105 transmits signals to the memories 202, 203. The instruction memory 202 is accessed by the microprocessor 105 via respective signals over an instruction address bus 204, an instruction data bus 205 and bus control signals 206. The data memory 203 is accessed by the microprocessor 105 via respective signals over a data address bus 207, a (data) data bus 208 and data bus control signals 209. Illustratively, the address and data buses are 32 bit buses, and the control signals are 5 bit signals as indicated in Fig. 2.

The MTC 104 accesses the various buses via connections shown. A select number of microprocessor trace signals is garnered from the buses in order to make measurements from the microprocessor 105 at the logic analyzer 101. The microprocessor trace signals are garnered from an instruction-address bus, a data-address bus, a data-data bus and bus control signals. The MTC 104 is configured via the UI 111 to select desired microprocessor trace signals from the buses 204, 205, 207 and 208 and to route these selected trace signals to pins 108 on the FPGA 103. In particular, the selected instruction-address signals 210, 211; the selected data-address signals 212, 213; and the control bus signals 214 and 215 are routed to the MTC 104 and then to the pins 108. Notably, the control bus signals 206, 209 are routed with respective address and data signals.

In contrast to many known methods of gathering measurement data where, for example, all address signals of the address buses 204, 207 must be routed for measuring, in the example embodiments, only select signals are routed to the trace pins 108. This allows the logic analyzer 101 to perform the measurements required for de-bugging the microprocessor 105 with the relatively scarce number of pins 108 allocated for trace measurements.

As noted previously, the number of pins dedicated for testing of components by a logic.analyzer or other test equipment is scarce. As such, minimizing the number of pins required is an on-going need of test equipment designer. The need to minimize pins for testing competes with the need to garner enough data and data from particular signal types in order to de-bug a microprocessor. Thus, it is useful to scale the signals for testing needed to the number of pins dedicated by the FPGA 103 for testing. This scaling is carried out via the present teachings in a variety of ways. Two illustrative methods are implemented to realize the efficient use of limited trace pins in trace measurements. While the example embodiments of the illustrative methods often describe routing address signals, it is contemplated that the data signals (both instruction side and data side) may be routed by similar methods.

A method of configuring a test instrument to gather germane signals from the microprocessor 104 is presently described. The method of the present example embodiment includes determining from a large number of signals(on the order of 10⁵) those signals germane to the FPGA 103 that relate to the microprocessor 105. These signals can be obtained from the microprocessor vendor or from a data sheet on the microprocessor 105. These signals are pre-determined, and are provided to the UI 111. The user may then select from this group of signals (on the order of 10¹ to 10²) those most needed to perform useful analysis of the function of the microprocessor 105. Using the configuration software (e.g., EDK software) of the UI 111, the MTC 104 is configured to retrieve these signals from the respective buses 204, 207 and to provide these traces to the trace pins 108. Beneficially, the selection of signals will be routed to the allocated trace pins. For example, if there are eight trace pins available, only eight signals may be routed for analysis. Those most useful signals for a particular measurement may be selected for routing during configuration of the MTC 104.

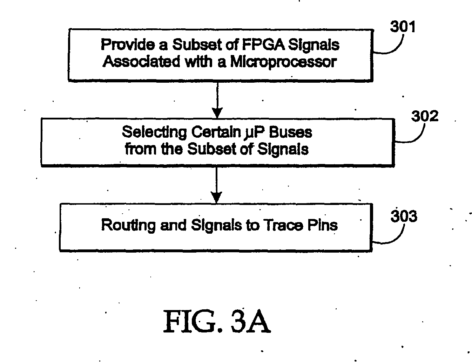

Fig. 3A is a flow-chart of a method for setting up a test instrument to perform measurements on a microprocessor of an FPGA in accordance with an example embodiment. The method is best understood when reviewed in conjunction with Figs. 1 and 2 and their description.

The method includes selecting a subset of the signals associated with a microprocessor at step 301. For example, in the FPGA 103 there may be 10⁵ or more signals available for the various components of the FPGA 103. Of these signals, only a portion is associated with the microprocessor 105. Because routing all signals to the trace pins 108 would be impractical, a subset of these signals associated with the microprocessor are determined and provided in a database in the UI 111. However, given the number of trace pins allocated for measurement by the logic analyzer 101, this subset may need to be further reduced.

At step 302, and depending on the number of pins 108 available, the subset of the signals may be further reduced. In a specific embodiment, the user determines certain microprocessor buses (e.g., the instruction-address bus 204 and the instruction-data bus 207) useful in the present analysis. The user selects the desired buses from the subset of the signals and inputs these via a GUI on the UI 111. After the buses are selected, the EDK software configures the MTC 104 to route the buses to the trace pins 108. At step 303, signals are routed from signals connected to the MTC 104 and then to the trace pins 108.

The present embodiment allows a user to configure the MTC 104 to access signals from the buses 204-209 engaging memory 202, 203. These signals are then transferred to pins 108 and then to the logic analyzer 101. As can be appreciated, the criteria for which signals are to be routed to the pins 108 can vary. However, the method of the example embodiment allows the user to match the signals routed to the pins available. After the MTC 104 is configured, the logic analyzer toggles the pins 108 to determine the pairing of signals and pins.

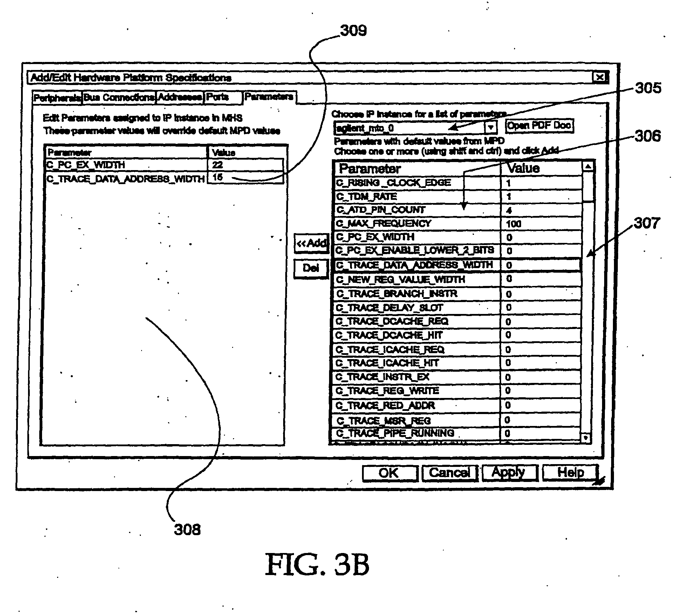

Fig. 3B is a representation of a GUI useful in setting up a test instrument to perform measurements on the microprocessor 105 in accordance with an example embodiment. The GUI is implemented in software in the UI 111 for example.

The GUI includes a field 305 where the MTC 104 is selected. For example, the MTC may be a MicroBlaze Trace Core provided by Agilent Technologies. After the selection of the MTC, a plurality of microprocessor bus signals and parameters specific to the chosen MTC populates field 306. The field 306 allows the selection of microprocessor signals of interest to the user. A selected signal is shown at 307. The selected signals are added to a field 308. Field 309 allows the user to enter the number of signals to be routed to the trace pins 108. In this manner, the number of signals can be tailored to the available pin capacity.

Another method of the present teachings is useful in reducing the number of pins required for testing a microprocessor. The illustrative method is a post-processor technique, where the inverse assembler application software of the logic analyzer 101 is provided with certain parameters related to the specific microprocessor under evaluation.

As alluded to previously, a full inverse assembler of a 32-bit Harvard architecture microprocessor would require on the order of 135 pins in order to route all signals. However, the microprocessor 105 normally includes address space that far exceeds the code written to the microprocessor 105. Therefore there are portions of the memory space that are not accessed and thus there are address signals that are static. Analysis of the microprocessor 105 requires the garnering of only the active signals. As such, the parameters provided to the inverse assembler of the logic analyzer 101 indicates the address bits that are active in the microprocessor 105. The logic analyzer 101 is then free to capture only the active signals for analysis, setting all static bits to a predefined value. This allows only those bits that are active and thus needed for analysis by the logic analyzer to be routed through the trace pins 108.

By way of example, microprocessor programs on FPGAs do not generally require a full 4-Gbytes (32-bits) of program space and a full 4-Gbytes of data space. The subset of the address space that is used by the program often can be represented with fewer than 32-bits. Only this smaller set of bits need be routed to the pins of the FPGA. According to the method of the present teachings, static bits are not routed to the pins of the FPGA.

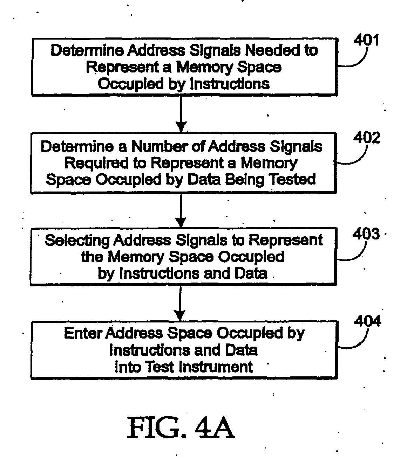

Fig. 4A is a flow-chart of a method of setting up a test instrument to perform measurements on a microprocessor in accordance with an example embodiment. The method is best understood when reviewed in conjunction with Figs. 1 and 2 and their description. As noted previously, the methods of the example embodiments focus on the garnering of address signals from the microprocessor. It is emphasized that data signals may be garnered by similar methods.

At step 401, the number of address signals needed to fully represent the memory space occupied by the software program of the microprocessor being tested is determined. Normally, the number of address signals is determined by the user based on the amount of memory implemented in the user design. As noted previously, depending on the size of the code written to the microprocessor, only a portion of the address space is active. Thus only a portion of the address signals access the populated memory. Referring to Fig. 2, this translates to only some of the instruction address signals between the memory 202 and the microprocessor 105 and some of the data address signals between the memory 203 and the microprocessor 105 transmitting 'active' signals. Because these active signals are useful in making measurements for analysis, only these active signals are routed to the MTC 104 and then to the logic analyzer 101.

At step 402, the number of address signals needed to fully represent the memory space occupied by the data of the microprocessor being tested is determined by the user based on the amount of memory implemented in the user design. As noted previously, depending on the size of the code written to the microprocessor, only a portion of the address space is active. Thus only a portion of the address signals are required to access the populated memory.

At step 403, the address signals to represent the memory space for both the instruction side and the data side of the microprocessor 105 are selected. In the example embodiment described in connection with Fig. 2, selected address signals 210 and selected address signals 211 from the address buses 204 and 207, respectively, are routed to the MTC 104 and then to the logic analyzer 101 for measurement and analysis. The selection of the address signals is carried out during the configuration of the MTC 104 using configuration software (e.g., the EDK software noted previously) and the UI 111 as described previously.

In a specific embodiment, the selection of the address signals for routing to the logic analyzer is carried out during the configuration of the MTC 104 via the configuration software in the UI 111. After the number of address signals required is determined at steps 401, 402, the user selects the starting address and, because the total address signals for use are selected, the 'ending' address signal is known. In addition, after the selection of the address signals is completed, the user selects the pins for each of the bits selected in step 403. For example, if there are 10 address bits desirably routed to trace pins, the configuration software configures the MTC 104 to route the ten address bits to ten selected trace pins (e.g., ten of the pins 108).

After the selection of the address signals at step 403, at step 404 the address space occupied by the instruction and data sides is entered into the test instrument, which in the present embodiment is the logic analyzer 101. Notably, the active bits are entered and are combined with the static bits.

In specific embodiments, all signals needed to fully represent the memory space may be routed via the method of Fig. 4A. However, there may not be enough trace pins to route all signals. In a specific embodiment, the user may opt to not provide signals for all buses. As such, in order to work within a limited pin budget the user may opt to trace only the instruction side of processor, or to trace only the data side of the microprocessor. Further, on the selected side (instruction or data), the user can opt to trace only the address bus or to trace only the data bus. In order to adjust the selection of trace signals for measurement, the method of the example embodiment is modified to select a 'side' or a bus (es) for analysis. Again, this selection is carried out in the configuration of the MTC 104. The inverse assembler then automatically adjusts its functionality to match the signals that are provided. This is accomplished by the logic analyzer/inverse assembler interrogating the MTC 104 via JTAG link 112 to determine the signals that have been pinned-out.

In order to realize the referenced adjustments, the method of the example embodiment of Fig. 4A contemplates eliminating one of steps 401 or 402 depending on the chosen side for measuring; and the modification of steps 403 and 404 to tailor the method to the selected side or buses. By way of example, if the user desires or only has enough trace pins to make measurements on the instruction side of the microprocessor, step 402 would be foregone. In addition, steps 403 would be modified to select address signals to represent the memory space occupied by the instructions and not the data; and step 404 would be modified to enter the address space occupied by the instructions and not the data.

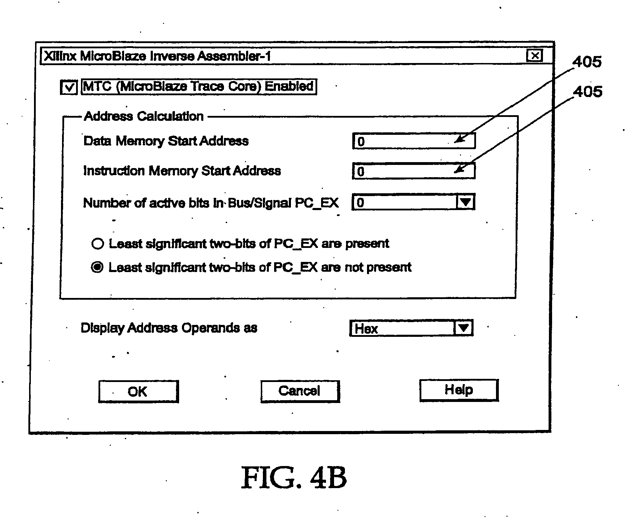

Fig. 4B is a representation of the GUI of the logic analyzer 110 adapted to enter the address space as set forth in step 404. Having knowledge of the starting address for active bits, the user sets the starting address signal for each side of the microprocessor. The user enters the starting address of the data-side memory and for the instruction side memory in fields 405. The inverse assembler of the logic analyzer 101 computes the full 32 bit address by adding this value to the starting address to the address bits that are routed to pins on the FPGA 103. Notably a similar GUI for the data signals may be provided for both the instruction side and data side of the microprocessor 105.

In view of this disclosure it is noted that the various methods and devices described herein can be implemented in hardware and software. Further, the various methods and parameters are included by way of example only and not in any limiting sense. In view of this disclosure, those skilled in the art can implement the present teachings in determining their own techniques and needed equipment to implement these techniques, while remaining within the scope of the appended claims.

## Claims

1. A method for setting up a test instrument to perform measurements on a microprocessor (105), the method comprising:
determining a number of address signals required to fully represent a memory space occupied by a plurality of instructions (401);
determining a number of address signals required to fully represent a memory space occupied by data (402);
selecting address signals to fully represent the memory space occupied by the instructions, or the data, or both (403); and
entering into the test instrument an address space occupied by the instructions and the data (404).

2. A method as recited in claim 1, wherein the microprocessor (105) is implemented in a field programmable gate array (FPGA) (103).

3. A method as recited in claim 2, further comprising routing specific address signals to designated pins (108) on the FPGA (103).

4. A method as recited in claim 2, further comprising providing a microprocessor trace core (104) adapted to select microprocessor trace signals (210-215) and to route the microprocessor trace signals to pins on the FPGA.

5. A method as recited in claim 4, wherein the microprocessor trace signals comprise one or more of: an instruction-address bus (204), a data-address bus (207), a data-data bus (208) and bus control signals (206,209).

6. A method as recited in claim 5, wherein the selecting the microprocessor trace signals further comprises selecting only the address signals required to fully represent the memory space.

7. A method as recited in claim 6, further comprising configuring the microprocessor trace core (104) to perform the selecting of microprocessor trace signals.

8. A method as recited in claim 1, wherein the entering further comprises selecting a starting memory address (405).

9. A method for setting up a test instrument to perform measurements on a microprocessor (105), the method comprising:
selecting a subset of signals (301), wherein the subset of signals includes only signals associated with the microprocessor (105); and
selecting microprocessor trace signals (302) from the subset of signals based on a number of pins allocated.

10. A method as recited in claim 9, further comprising:
providing a microprocessor trace core (104) on a programmable logic device (PLD).

11. A method as recited in claim 9, wherein the PLD is a field programmable gate array (FPGA) (103).

12. A method as recited in claim 11, further comprising:
configuring the microprocessor trace core to select the microprocessor trace signals.

13. A method as recited in claim 9, further comprising, after the selecting the microprocessor trace signals, routing the microprocessor trace signals (303) to selected pins (108).

14. A method as recited in claim 9, further comprising, embedding a microprocessor trace core (104) adapted to select the microprocessor trace signals (210-215) and to route the microprocessor trace signals to pins (108) on the FPGA (103).

15. A method as recited in claim 14, wherein the microprocessor trace signals comprise one or more of: an instruction-address bus (204), a data-address bus (207), a data-data bus (208) and bus control signals (206,209).

16. A method as recited in claim 15, wherein the selecting the microprocessor trace signals further comprises selecting only the address signals required to fully represent a memory space (403).

17. A dynamic probe system, comprising:
a testing device (101);
a field programmable gate array (103) having a microprocessor (105);
trace pins (108) adapted to connect the testing device (101) to the field programmable gate array (103); and
a microprocessor trace core (104) configured to select microprocessor trace signals (210-215) from a subset of signals, which includes only signals associated with the microprocessor.

18. A dynamic probe system as recited in claim 17, wherein the testing device (101) is a logic analyzer.

19. A dynamic probe system as recited in claim 17, wherein the microprocessor trace signals (210, 211) are only address signals that are required to fully represent a memory space (202,203).

20. A dynamic probe system as recited in claim 17, wherein the microprocessor trace signals comprise one or more of: an instruction-address bus (204), a data-address bus (207), a data-data bus (208) and bus control signals (206,209).
